# EUROPEAN PATENT SPECIFICATION

(11) **EP 4 159 368 B1**
(45) Date of publication and mention of the grant of the patent: **29.05.2024**
(21) Application number: 21199706.9
(22) Date of filing: 29.09.2021
(51) Int. Cl.: B23Q 17/22

(54) **A SYSTEM AND A METHOD FOR DETERMINING CONTACT BETWEEN A CUTTING TOOL AND AN ELECTRICALLY CONDUCTIVE WORKPIECE**
SYSTEM UND VERFAHREN ZUR BESTIMMUNG DES KONTAKTS ZWISCHEN EINEM SCHNEIDWERKZEUG UND EINEM ELEKTRISCH LEITENDEN WERKSTÜCK
SYSTÈME ET PROCÉDÉ DE DÉTERMINATION DE CONTACT ENTRE UN OUTIL DE COUPE ET UNE PIÈCE ÉLECTRIQUEMENT CONDUCTRICE

(43) Date of publication of application: 05.04.2023
(73) Proprietor: Seco Tools AB, 737 82 Fagersta (SE)
(72) Inventor: Karim, Amir, 737 82 Fagersta (SE)
(74) Representative: Sandvik

(56) References cited:
- EP-A2- 1 197 819
- JP-U- S5 214 286
- US-A1- 2016 136 769

## Description

### TECHNICAL FIELD

The present invention relates to a system and a method for determining contact between a cutting tool an electrically conductive workpiece.

### BACKGROUND

In a cutting process, a cutting tool, having a cutting edge, is arranged to be brought in contact with a workpiece in order to bring the workpiece into a desired shape and size by removal of chips from the workpiece. Before starting the cutting process, the position of the cutting edge should be determined in order to create a cutting program that results in a high quality of the workpiece. This determination is usually performed by manual inspection by the operator determining when the cutting tool comes into contact with the workpiece, which is a time consuming process. During the cutting process it is often necessary to change the cutting tool or a part of the cutting tool since it becomes worn out. The position of the new cutting edge should then be determined again before the cutting process is re-started. When performing multiple, complex cutting processes where a lot of tool changes are needed, a lot of time is spent on determining cutting edge positions between cutting, thereby lowering the productivity of the cutting process.

Attempts to solve this problem have been made by incorporating measurement equipment on a machine level for determining, e.g. power changes or spindle vibrations which will change when the tool starts cutting the workpiece. Such a solution is disclosed in US 2020/0215710 A1.

JP S52 14286 U, on which the preamble of appended claim 1 is based, discloses a milling system in which each cutting insert comprises a respective contact detection whisker. All the whiskers are conductively connected to the machine via a single circuit. When one of the whiskers contacts the workpiece, the circuit loop is closed and activates a feeding speed reduction of the tool. This known system can only identify when a whisker contacts the workpiece, but cannot identify which whisker it was.

A problem with these solutions is that they are not very accurate, and the risk of incorrect determinations of the cutting edge position is high, resulting in high risk for a reduced quality of the machined workpiece.

### SUMMARY OF THE INVENTION

It is an object of the present invention to overcome, or at least partially overcome, said problem by introducing a system and a method for determining contact between a cutting tool and an electrically conductive workpiece.

The object of the present invention is achieved by means of a system for determining contact between a cutting tool and an electrically conductive workpiece, the system comprises a cutting tool comprising a toolholder and n cutting inserts mounted in the toolholder, wherein n is an integer ≥ 2, wherein each of the n cutting inserts comprises an electrically conductive surface layer, wherein the cutting tool is configured to bring the n cutting inserts in and out of contact with an electrically conductive workpiece, **characterized in** that each of the n cutting inserts are electrically insulated from the toolholder; and in that the system further comprises an electrical circuit, wherein the electrical circuit comprises:
- an electric power source arranged to generate an electrical voltage, and
- n first connection units, which each comprises a first end, a second end, and, between the first end and the second end, a resistor having an electrical resistance, wherein each of the n first connection units are electrically connected to a respective cutting insert at the first end and to a first pole of the electric power source at the second end, wherein each of the n first connection units are electrically connected to the first pole in parallel with all the other n-1 first connection units, and
- a second connection unit operatively connected to a second pole of the electric power source at a first end and comprising a contact adapted to be electrically connected to an electrically conductive workpiece at a second end; wherein
the system further comprises a measuring unit and an analysis unit, wherein the measuring unit is configured to measure an electrical voltage over each of the first connection units, wherein the measuring unit is operatively connected to the analysis unit, wherein the analysis unit is configured to determine a contact between the cutting tool and an electrically conductive workpiece material based on the measured electrical voltages.

When a cutting insert mounted in the toolholder comes in contact with an electrically conductive workpiece, the electric power source, the first connection unit, the cutting insert, the electrically conductive workpiece and the second connection unit forms a closed electrical circuit, which results in an electrical current flowing through the circuit. When the electrical current flows through the first connection unit, an electrical voltage is measurable over the first connection unit, according to Ohm's law: U = R·I, where U is the electrical voltage, R is the electrical resistance, and I is the electrical current.

However, if a cutting insert is not in contact with an electrically conductive workpiece, no closed circuit is formed and no electrical current flows through the circuit. Accordingly, no electrical voltage is measurable over the first connection unit.

Accordingly, if a measured electrical voltage over any of the first connection units has a non-zero value, this indicates that the corresponding cutting insert is in contact with the electrically conductive workpiece, and the cutting tool is thus in contact with the workpiece.

The electrical insulation between the n cutting inserts and the toolholder prevents the current from flowing from one cutting insert to another cutting insert via the toolholder.

Since the system is configured to measure the electrical voltage over each of the first connection units, and since the cutting inserts are electrically insulated from the toolholder, it is possible for the analysis unit to determine a contact between individual inserts in the toolholder and an electrically conductive workpiece, which results in a very accurate determining of the position of different cutting edges in the cutting tool.

The cutting tool is any type of cutting tool, e.g. a milling cutter, a drilling tool, a boring tool or a turning tool. The cutting tool is preferably a metal cutting tool.

The surface layer of the cutting insert is defined as the outermost material layer of the cutting insert. The surface layer can be an electrically conductive coating on the cutting insert, comprising e.g. titanium-carbon-nitride (TiCN), titanium-nitride (TiN), chromium (Cr), titanium-aluminum-nitride (TiAIN), niobium-nitride (NbN) or titanium-silicon-nitride (TiSiN). In case of an uncoated cutting insert, the surface layer comprises the same material as the core of the cutting insert, e.g. cemented carbide.

The electric power source is preferably a battery.

The second connection unit is operatively connected to the second pole of the electric power source either directly via e.g. an electric cable or indirectly via e.g. electrically conductive machine parts.

The measuring unit preferably comprises n measurement devices configured for measuring electrical voltage, either directly by e.g. voltmeters or indirectly by measuring the electrical current in the first connection units by e.g. amperemeters.

Accordingly, the electrical voltage over each of the n first connection units can be measured either directly over the first connection units or indirectly by measuring the electrical current in each of the first connection units.

According to an embodiment, each of the n first connection units comprises only one resistor. The resistor preferably has a much higher electrical resistance than the rest of the components in the first connection unit, which are electrical conductors. The resistor preferably has an electrical resistance that is at least 1000 times higher than the electrical resistance of the other components in the first connection unit.

According to an embodiment, the electrical voltage over each of the n first connection units are preferably measured by measuring the electrical voltage over the resistor in the respective first connection unit.

Since the electrical resistance of the resistor is much higher than for the rest of the components in the first connection unit, the electrical voltage over the resistor is representative of the electrical voltage over the first connection unit.

According to an embodiment, each of the n first connection units comprises a plurality of resistors connected in series. In this case, the electrical voltage over each of the n first connection units are preferably measured by measuring the electrical voltage over one of the resistors in the respective first connection unit. The electrical voltage can also be measured over a plurality of the resistors in the respective first connection unit.

In order to determine if an electrical current flow through the first connection unit, and the corresponding cutting insert is in contact with an electrically conductive workpiece, it is enough to measure the electrical voltage over one of the resistors in the first connection unit in this embodiment.

The analysis unit is a unit is configured to interpret and analyze the measured electrical voltages. The analysis unit is e.g. a computer.

According to an embodiment, the system further comprises an electrically conductive workpiece, wherein the electrically conductive workpiece is electrically connected to the second pole of the electric power source via the contact.

The electrically conductive workpiece is e.g. a metallic workpiece.

According to an embodiment, the toolholder, the electrically conductive workpiece material, and one of the first or second poles of the electric power source have the same electrical potential.

By having the toolholder, the electrically conductive workpiece material, and one of the first or second poles of the electric power source arranged at the same electrical potential, the measurement of the electrical voltages over the first connection units are facilitated, due to the reduced amount of calibration needed to be performed by the analysis unit.

According to an embodiment, the toolholder, the electrically conductive workpiece material, and one of the first or second poles of the electric power source are electrically grounded.

By having the toolholder, the electrically conductive workpiece material, and one of the first or second poles of the electric power source electrically grounded, the measurement of the electrical voltages over the first connection units are facilitated, due to the reduced amount of calibration needed to be performed by the analysis unit.

According to an embodiment, the toolholder comprises n insert pockets, wherein each of the n cutting inserts are mounted in one respective insert pocket, wherein each of the n insert pockets comprises an electrically insulating material layer between the toolholder and the cutting insert mounted in the insert pocket.

By providing an insulating material layer between the toolholder and the cutting insert, the cutting insert will be electrically insulated from the toolholder. This electrical insulation prevents the current from flowing from one cutting insert to another cutting insert via the toolholder. Due to this, it is possible to determine a contact between individual cutting inserts and an electrically conductive workpiece.

According to an embodiment, each of the n first connection units comprises an electrical contact pad at the first end, which is arranged in electrical contact with the electrically conductive surface layer of the respective cutting insert.

By providing the first end of the n first connection units with an electrical contact pad, the connection of the cutting inserts to the first pole of the electric power source is facilitated.

According to an embodiment, each of the electric contact pads are arranged in one respective insert pocket between the electrically insulating material layer and the cutting insert mounted in the insert pocket.

By having each of the electric contact pads are arranged in one respective insert pocket between the electrically insulating material layer and the cutting insert mounted in the insert pocket, the connection of the cutting inserts to the first pole of the electric power source is facilitated. Due to this feature, the cutting inserts can be mounted in the insert pockets by use of conventional fastening devices and at the same time being connected to the first pole of the electric power source, i.e. no further steps of connecting the cutting inserts are needed.

According to an embodiment, all the first connection units have the same electrical resistance.

By letting all the first connection units have the same electrical resistance, it is possible to detect which individual cutting inserts that are in contact with an electrically conductive workpiece material in the situation where a plurality of cutting inserts is in contact with the electrically conductive workpiece at the same time.

According to an embodiment, each of the first connection units have an electrical resistance of between 50 kΩ and 500 kΩ.

According to an embodiment, the measuring unit is operatively connected to the analysis unit via a wireless connection. The wireless connection being e.g. a Wireless Local Area Network, WLAN, Bluetooth^{™}, ZigBee, Ultra-Wideband, Near Field Communication, NFC, Radio Frequency Identification, RFID, or similar network.

According to an embodiment, the electric power source and the measuring unit are arranged in the toolholder.

By having the electric power source and the measuring unit arranged in the toolholder, the system becomes compact and can be implemented in cutting operations where there is a limited amount of space.

According to an embodiment, the cutting tool is a rotating tool, e.g. a milling cutter, a drilling tool or a boring tool.

According to an embodiment, the toolholder is mounted, directly or indirectly in a machine part, and wherein the second connection unit is, at least partly, arranged within the machine part. The machine part is e.g. a machine spindle.

By having the second connection unit, at least partly, arranged within the machine part, the connection of the electrically conductive workpiece to the second pole of the electric power source is facilitated, since no external electrical connection is needed in the toolholder.

According to an embodiment, the measuring unit comprises an internal memory, wherein the internal memory is configured to store the measured electrical voltages, and wherein the measuring unit is configured to transmit the measured electrical voltages stored in the internal memory to the analysis unit.

By having an internal memory arranged in the measuring unit it is possible to transmit the measured electrical voltages to the analysis unit at a later stage if the connection between the measuring unit and the analysis unit is temporarily lost. In this way, contacts between the cutting tool and an electrically conductive workpiece can still be determined for the purpose of analyzing the usage of the cutting tool.

According to an embodiment, the analysis unit is configured to determine a contact between each of the n cutting inserts and an electrically conductive workpiece based on the measured electrical voltages.

By having the analysis unit configured to determine a contact between each of the n cutting inserts and an electrically conductive workpiece based on the measured electrical voltages, a very accurate determining of the position of all cutting edges in the cutting tool can be made and thereby reducing the risk of incorrect calibrations and thereby reducing the risk of reduced quality of the machined workpiece.

According to an embodiment, the system further comprises a time measurement device, which is operatively connected to the analysis unit, and wherein the analysis unit is adapted to determine the time of contact between any of the n cutting inserts and an electrically conductive workpiece.

According to an embodiment, the analysis unit is configured to determine the time of contact between each of the n cutting inserts and an electrically conductive workpiece.

According to an embodiment, the analysis unit is configured to compare the determined time of contact with a minimum threshold value and to discard the determined contact if the determined time of contact is shorter than the minimum threshold value.

By discarding determined contacts where the time of contact is shorter than the minimum threshold value, the amount of false determination is reduced. There might be, for example, a situation where a flying chip from the cutting process will, for a very short time, come in contact with a non-cutting cutting insert and the electrically conductive workpiece, thereby closing the electric circuit between the non-cutting insert and the electrically workpiece, which will then be determined as a contact. If the determined contact is discarded if the time of contact is shorter than a minimum threshold value this problem will be reduced. The minimum threshold value depends on the cutting process, e.g. which cutting feed rate or which rotational cutting speed is used.

According to an embodiment, the analysis unit is configured to determine a plurality of subsequent contacts between each of the n cutting inserts and an electrically conductive workpiece, and to determine the accumulated time of contact between each of the n cutting inserts and an electrically conductive workpiece.

By determining the accumulated time of contact between each of the n cutting inserts and an electrically conductive workpiece it is possible to estimate the amount of wear of each of the n cutting inserts since the wear is a function of the time of cut.

According to an embodiment, the system further comprises a user interface, wherein the user interface is operatively connected to the analysis unit, wherein the analysis unit is configured to compare the determined accumulated time of contact with a maximum threshold value, wherein the analysis unit is configured to generate a warning signal if the determined accumulated time of contact is equal to or higher than the maximum threshold value, and wherein the system is configured to generate a warning based on the generated warning signal, wherein the warning is presented via the user interface.

The user interface can be e.g. a visual user interface in form of e.g. a display or an audial user interface in form of e.g. a speaker. The warning can be e.g. a visual warning or an audial warning.

By comparing the accumulated time of contact with a maximum threshold value, it is possible for the analysis unit to determine when it is time to change the cutting insert since the wear of the cutting insert is a function of the time of cut. By doing this comparison it is possible to optimize the usage of each of the n cutting insert by not changing the cutting inserts too soon, which would result in an ineffective usage of the cutting inserts, and not too late, which would affect the quality of the machined workpiece. By presenting the warning via the user interface, an operator of the cutting tool is informed that it is time to change one or more of the n cutting inserts. The maximum threshold value depends on which cutting operation that is performed, which cutting data parameters that are used, e.g. cutting feed rate and rotational cutting speed, which type of workpiece that is processed, and which type of cutting inserts that are used in the cutting operation.

According to an embodiment, the analysis unit is operatively connected to a database, and wherein the system is configured to store the accumulated time of contact between each of the n cutting inserts and an electrically conductive workpiece in the database. The stored accumulated time of contact is preferably cross-referenced with information regarding the cutting process, such as cutting data parameters, type of workpiece processed and cutting insert information, in the database.

By storing the determined accumulated time of contact in the database, it is possible to track the historical usage of each of the n cutting inserts mounted in the toolholder.

According to an embodiment, the analysis unit is configured to determine a relation between the total machining operational time and the determined accumulated time of contact of the cutting inserts.

By determining a relation between the total machining operational time and the determined accumulated time of contact of the cutting inserts, the efficiency of the cutting process can be evaluated.

According to an embodiment, each of the n cutting inserts are provided with a unique identification marking. The unique identification marker is a machine readable code comprising unique cutting insert identification data. The unique cutting insert identification data can be e.g. a unique identification number. The unique identification marker can be e.g. a Quick Response code, a High Capacity Colored Two Dimensional Code, a European Article Number code, a DataMatrix code, an Radio Frequency Identification (RFID) code or a MaxiCode.

This unique cutting insert identification data can be linked to unique cutting insert information in a tool database provided by the tool manufacturer. By reading the unique cutting insert identification data, the unique cutting insert information can be accessed via e.g. a smartphone app with access to the tool database. The unique cutting insert information preferably comprises recommended time of usage of the insert for a specific cutting operation. The unique cutting insert information preferably also comprises geometrical information of the unique cutting insert.

The object of the present invention is further achieved by means of a method for determining contact between a cutting tool and an electrically conductive workpiece, the method comprises the steps of:
- providing a system as disclosed above;
- providing an electrically conductive workpiece;
- operatively connecting the electrically conductive workpiece to the second pole of the electric power source via the contact;
- electrically charging the electrically conductive surface layer of the n cutting inserts, by activating the electric power source;
- measuring an electrical voltage over each first connection unit;
- transmitting the measured electrical voltages to the analysis unit; and
- determining a contact between the cutting tool and the electrically conductive workpiece by analyzing the measured voltages, where a contact is determined to take place if a measured electrical voltage has a non-zero value.

When a cutting insert in the toolholder comes in contact with an electrically conductive workpiece material, the electric power source, the first connection unit, the cutting insert, the electrically conductive workpiece and the second connection unit forms a closed electrical circuit, which results in an electrical current flowing through the circuit. When the electrical current flows through the first connection unit, an electrical voltage is measurable over the first connection unit, according to Ohm's law: U = R·I, where U is the electrical voltage, R is the electrical resistance, and I is the electrical current.

However, if a cutting insert is not in contact with an electrically conductive workpiece, no closed circuit is formed and no electrical current flows through the circuit. Accordingly, no electrical voltage is measurable over the first connection unit.

Accordingly, if a measured electrical voltage over any of the first connection units has a non-zero value, this indicates that the corresponding cutting insert is in contact with the electrically conductive workpiece, and the cutting tool is thus in contact with the workpiece.

Since the electrical voltage over each of the first connection units is measured, and since the cutting inserts are electrically insulated from the toolholder, it is possible to determine a contact between individual inserts in the toolholder and an electrically conductive workpiece, which results in a very accurate determining of the position of different cutting edges in the cutting tool.

The electrical voltage over each first connection unit is preferably measured by measuring the electrical voltage over the resistor in the respective first connection unit.

According to an embodiment, the method further comprises the step of:
- arranging the toolholder, the electrically conductive workpiece, and one of the first or second poles of the electric power source at the same electrical potential.

By having the toolholder, the electrically conductive workpiece material, and one of the first or second poles of the electric power source arranged at the same electrical potential, the measurement of the electrical voltages over the first connection units are facilitated, due to the reduced amount of calibration needed to be performed by the analysis unit.

According to an embodiment, the method further comprises the step of:
- electrically grounding the toolholder, the electrically conductive workpiece, and one of the first or second poles of the electric power source.

By having the toolholder, the electrically conductive workpiece material, and one of the first or second poles of the electric power source electrically grounded, the measurement of the electrical voltages over the first connection units are facilitated, due to the reduced amount of calibration needed to be performed by the analysis unit.

According to an embodiment, the method further comprises the step of:
- determining a contact between each of the n cutting inserts and the electrically conductive workpiece by analyzing the measured electrical voltages, where a contact is determined to take place if the measured electrical voltage has a non-zero value.

By determining a contact between each of the n cutting inserts and an electrically conductive workpiece based on the measured electrical voltages, a very accurate determining of the position of all different cutting edges in the cutting tool can be made and thereby reducing the risk of incorrect calibrations and thereby reducing the risk of low quality of the machined workpiece.

According to an embodiment, the method further comprises the steps of:
- determining the measured electrical voltages as a function of time; and
- determining a time of contact between any of the n cutting inserts and the electrically conductive workpiece.

According to an embodiment, the method further comprises the step of:
- determining a time of contact between each of the n cutting inserts and the electrically conductive workpiece.

According to an embodiment, the method further comprises the steps of:
- comparing the determined time of contact with a minimum threshold; and
- discarding the determined contact if the determined time of contact is shorter than the minimum threshold value.

By discarding determined contacts where the time of contact is shorter than the minimum threshold value, the amount of false determination is reduced. There might be, for example, a situation where a flying chip from the cutting process will, for a very short time, come in contact with a non-cutting cutting insert and the electrically conductive workpiece, thereby closing the electric circuit between the non-cutting insert and the electrically workpiece material, which will then be determined as a contact. If the determined contact is discarded if the time of contact is shorter than a minimum threshold value this problem will be reduced. The minimum threshold value depends on the cutting process, e.g. which cutting feed rate or which rotational cutting speed is used.

According to one embodiment, the method further comprises the steps of:
- determining a plurality of subsequent contacts between each of the n cutting inserts and the electrically conductive workpiece; and
- determining the accumulated time of contact between each of the n cutting inserts and the electrically conductive workpiece.

By determining the accumulated time of contact between each of the n cutting inserts and an electrically conductive workpiece it is possible to estimate the amount of wear of each of the n cutting inserts since the wear is a function of the time of cut.

According to an embodiment, the method further comprises the steps of:
- comparing the determined accumulated time of contact with a maximum threshold value;
- generating a warning signal if the determined accumulated time of contact is equal to or higher than the maximum threshold value;
- generating a warning based on the generated warning signal; and
- presenting the warning via a user interface.

By comparing the accumulated time of contact with a maximum threshold value, it is possible for the analysis unit to determine when it is time to change the cutting insert since the wear of the cutting insert is a function of the time of cut. By doing this comparison it is possible to optimize the usage of each of the n cutting insert by not changing the cutting inserts too soon, which would result in an ineffective usage of the cutting inserts, and not too late, which would affect the quality of the machined workpiece. By presenting the warning via the user interface, an operator of the cutting tool is informed that it is time to change one or more of the n cutting inserts. The maximum threshold value depends on which cutting operation that is performed, which cutting data parameters that are used, e.g. cutting feed rate and rotational cutting speed, which type of workpiece that is processed, and which type of cutting inserts that are used in the cutting operation.

According to an embodiment, the method further comprises the step of:
- storing the accumulated time of contact between each of the n cutting inserts and the electrically conductive workpiece in a database.

The stored accumulated time of contact is preferably cross-referenced with information regarding the cutting process, such as cutting data parameters, type of workpiece processed and cutting insert information, in the database.

By storing the determined accumulated time of contact in the database, it is possible to track the historical usage of each of the n cutting inserts mounted in the toolholder.

### BRIEF DESCRIPTION OF THE DRAWINGS

Figure 1 schematically illustrates a system for determining contact between a cutting tool and an electrically conductive workpiece according to an embodiment of the invention,
Figure 2 schematically illustrates the electrical circuit and the measurement unit comprised in the system illustrated in figure 1,
Figure 3 schematically illustrates a flow chart of example method steps for determining contact between a cutting tool and an electrically conductive workpiece according to an embodiment of the invention.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art, the invention being defined by the appended claims. Like reference numbers refer to like elements throughout. The elements illustrated in the drawings are not necessary according to scale. Some elements might have been enlarged in order to clearly illustrate those elements.

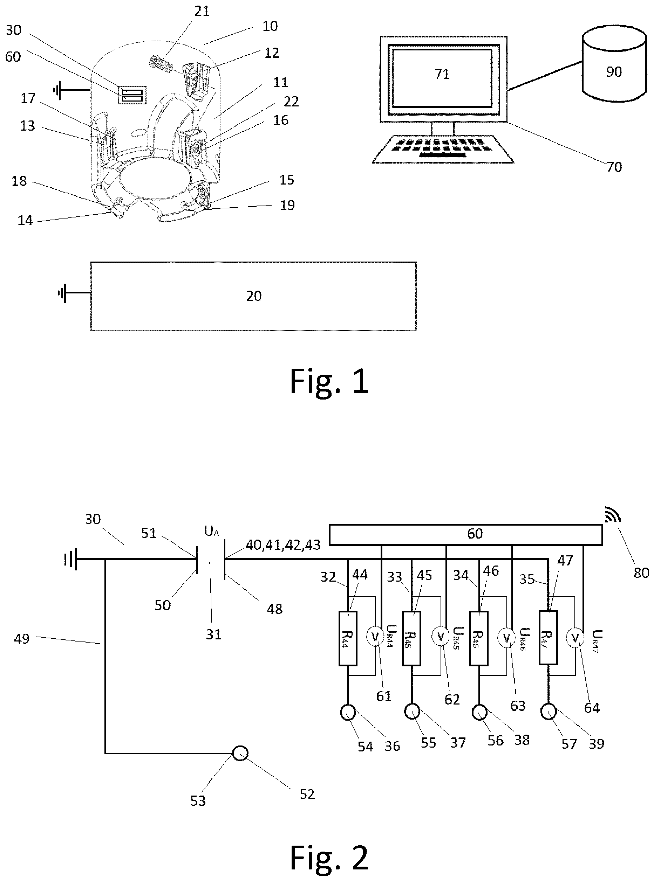

Figure 1 schematically illustrates a system for determining contact between a cutting tool (10) and an electrically conductive workpiece (20) according to an embodiment of the invention. The system comprises a cutting tool (10) in form of a milling cutter. The cutting tool (10) comprises a toolholder (11) having four insert pockets (16,17,18,19) in which four cutting inserts (12,13,14,15) are mounted. The cutting tool (10) is configured to bring the cutting inserts (12,13,14,15) in and out of contact with an electrically conductive workpiece (20). Each of the four insert pockets (16,17,18,19) comprises an electrically insulating material layer between the toolholder (11) and the cutting insert (12,13,14,15) mounted in the insert pocket (16,17,18,19). The cutting inserts (12,13,14,15) will thereby be electrically insulated from the toolholder (11). The cutting inserts (12,13,14,15) are mounted in the toolholder (11) by use of fastening screws (21). Each insert pocket (16,17,18,19) comprises a screw hole (22) for engagement with the fastening screw (21). The screw holes (22) comprise an electrically insulating material layer between the toolholder (11) and the fastening screw (21). The cutting inserts (12,13,14,15) comprises an electrically conductive surface layer. The system further comprises an electrical circuit (30) and a measuring unit (60). The electrical circuit (30) and the measuring unit (60) are arranged in the toolholder (11). The measuring unit (60) is operatively connected to an analysis unit (70) in form of a computer. The analysis unit (70) comprises a user interface (71) in form of a display. The analysis unit (70) is operatively connected with a database (90). The toolholder (11) and the electrically conductive workpiece (20) are electrically grounded.

Figure 2 schematically illustrates the electrical circuit (30) and the measuring unit (60) comprised in the system illustrated in figure 1. The electrical circuit (30) comprises an electric power source (31) in form of a battery, arranged to generate an electrical voltage (U_{A}). The electrical circuit (30) further comprises four first connection units (32,33,34,35), which each comprises a first end (36,37,38,39), and second end (40,41,42,43), and, between the first end (36,37,38,39) and the second end (40,41,42,43), a resistor (44,45,46,47) having an electrical resistance (R₄₄,R₄₆,R₄₆,R₄₇), wherein each of the four first connection units (32,33,34,35) comprise an electrical contact pad (54,55,56,57) at the first end (36,37,38,39), which is configured to be arranged in electrical contact with the electrically conductive surface layer of one respective cutting insert (12,13,14,15). Each of the four first connection units (32,33,34,35) are connected to a first pole (48) of the electric power source (31) at the second end (40,41,42,43), wherein each of the four first connection units (32,33,34,35) are electrically connected to the first pole (48) in parallel with all the other three first connection units (32,33,34,35). The electric circuit (30) further comprises a second connection unit (49) operatively connected to a second pole (50) of the electric power source (31) at a first end (51) and comprising a contact (52) configured to be electrically connected to an electrically conductive workpiece (20) at a second end (53). The second connection unit (49) is operatively connected to the second pole (50) of the electric power source (31) via an electrical cable. The measuring unit (60) comprises four measurement devices (61,62,63,64) configured to measure an electrical voltage (U_{R44},U_{R45},U_{R46},U_{R47}) over a respective resistor (44,45,46,47). The resistors (44,45,46,47) have a much higher electrical resistance (R₄₄,R₄₆,R₄₆,R₄₇) than the rest of the components in the first connection units (32,33,34,35), approximately 1000 times higher, which makes the measured electrical voltage (U_{R44},U_{R45},U_{R46},U_{R47}) over the resistor (44,45,46,47) representative to the electrical voltage over the first connection unit (32,33,34,35). The measuring unit (60) is operatively connected to the analysis unit (70) via a wireless connection (80). The second pole (50) of the electric power source (31) is electrically grounded.

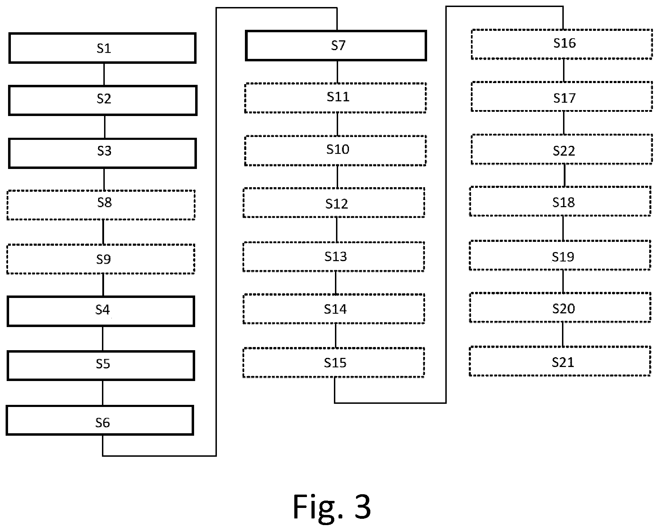

Figure 3 schematically illustrates a flow chart of example method steps according to an embodiment of the invention. The method for determining contact between a cutting tool comprises the steps of:
S1: providing a system as described above;
S2: providing an electrically conductive workpiece (20);
S3: operatively connecting the electrically conductive workpiece (20) to the second pole (50) of the electric power source (31) via the contact (52);
S4: electrically charging the electrically conductive surface layer of the n cutting inserts (12,13,14,15), by activating the electric power source;
S5: measuring an electrical voltage (U_{R44},U_{R45},U_{R46},U_{R47}) over each first connection unit (32,33,34,35);
S6: transmitting the measured electrical voltages (U_{R44},U_{R45},U_{R46},U_{R47}) to the analysis unit (70); and
S7: determining a contact between the cutting tool (10) and the electrically conductive workpiece (20) by analyzing the measured electrical voltages (U_{R44},U_{R45},U_{R46},U_{R47}), where a contact is determined to take place if a measured electrical voltage (U_{R44},U_{R45},U_{R46},U_{R47}) has a non-zero value.

The method further comprises the step of:
S8: arranging the toolholder (11), the electrically conductive workpiece (20), and one of the first or second poles (48,50) of the electric power source (31) at the same electrical potential.

The method further comprises the step of:
S9: electrically grounding the toolholder (11), the electrically conductive workpiece (20), and one of the first or second poles (48,50) of the electric power source (31).

The method further comprises the step of:
S10: determining a contact between each of the n cutting inserts (12,13,14,15) and the electrically conductive workpiece (20) by analyzing the measured electrical voltages (U_{R44},U_{R45},U_{R46},U_{R47}), where a contact is determined to take place if the measured electrical voltage (U_{R44},U_{R45},U_{R46},U_{R47}) has a non-zero value.

The method further comprises the steps of:
S11: determining the measured electrical voltages (U_{R44},U_{R45},U_{R46},U_{R47}) as a function of time; and
S12: determining a time of contact between any of the n cutting inserts (12,13,14,15) and the electrically conductive workpiece (20).

The method further comprises the step of:
S13: determining a time of contact between each of the n cutting inserts (12,13,14,15) and the electrically conductive workpiece (20).

The method further comprises the steps of:
S14: comparing the determined time of contact with a minimum threshold value; and
S15: discarding the determined contact if the determined time of contact is shorter than the minimum threshold value.

The method further comprises the steps of:
S16: determining a plurality of subsequent contacts between each of the n cutting inserts (12,13,14,15) and the electrically conductive workpiece (20); and
S17: determining the accumulated time of contact between each of the n cutting inserts (12,13,14,15) and the electrically conductive workpiece (20).

The method further comprises the steps of:
S18: comparing the determined accumulated time of contact with a maximum threshold value;
S19: generating a warning signal if the determined accumulated time of contact is equal to or higher than the maximum threshold value;
S20: generating a warning based on the generated warning signal; and
S21: presenting the warning via a user interface (71).

The method further comprises the step of:
S22: storing the determined accumulated time of contact between each of the n cutting inserts (12,13,14,15) and the electrically conductive workpiece (20) in a database (90).

## Claims

1. System for determining contact between a cutting tool (10) and an electrically conductive workpiece (20), the system comprises a cutting tool (10) comprising a toolholder (11) and n cutting inserts (12,13,14,15) mounted in the toolholder (11), wherein n is an integer ≥ 2, wherein each of the n cutting inserts (12,13,14,15) comprises an electrically conductive surface layer, wherein the cutting tool (10) is configured to bring the n cutting inserts (12,13,14,15) in and out of contact with an electrically conductive workpiece (20), **characterized in that** each of the n cutting inserts (12,13,14,15) are electrically insulated from the toolholder (11); and **in that** the system further comprises an electrical circuit (30), wherein the electrical circuit (30) comprises:
- an electric power source (31) arranged to generate an electrical voltage (U_{A}), and
- n first connection units (32,33,34,35), which each comprises a first end (36,37,38,39), a second end (40,41,42,43), and, between the first end (36,37,38,39) and the second end (40,41,42,43), a resistor (44,45,46,47) having an electrical resistance (R₄₄,R₄₆,R₄₆,R₄₇), wherein each of the n first connection units (32,33,34,35) are electrically connected to a respective cutting insert (12,13,14,15) at the first end (36,37,38,39) and to a first pole (48) of the electric power source (31) at the second end (40,41,42,43), wherein each of the n first connection units (32,33,34,35) are electrically connected to the first pole (48) in parallel with all the other n-1 first connection units (32,33,34,35), and
- a second connection unit (49) operatively connected to a second pole (50) of the electric power source (31) at a first end (51) and comprising a contact (52) configured to be electrically connected to an electrically conductive workpiece (20) at a second end (53); wherein
the system further comprises a measuring unit (60) and an analysis unit (70), wherein the measuring unit (60) is configured to measure an electrical voltage (U_{R44},U_{R45},U_{R46},U_{R47}) over each of the first connection units (32,33,34,35), wherein the measuring unit (60) is operatively connected to the analysis unit (70), wherein the analysis unit (70) is configured to determine a contact between the cutting tool (10) and an electrically conductive workpiece (20) based on the measured electrical voltages (U_{R44},U_{R45},U_{R46},U_{R47}).

2. System according to claim 1, wherein the system further comprises an electrically conductive workpiece (20), wherein the electrically conductive workpiece (20) is electrically connected to the second pole (50) of the electric power source (31) via the contact (52).

3. System according to claim 2, wherein the toolholder (11), the electrically conductive workpiece (20), and one of the first or second poles (48,50) of the electric power source (31) have the same electrical potential.

4. System according to any of the preceding claims, wherein the toolholder (11) comprises n insert pockets (16,17,18,19), wherein each of the n cutting inserts (12,13,14,15) are mounted in one respective insert pocket (16,17,18,19), wherein each of the n insert pockets (16,17,18,19) comprises an electrically insulating material layer between the toolholder (11) and the cutting insert (12,13,14,15) mounted in the insert pocket (16,17,18,19).

5. System according to any of the preceding claims, wherein each of the n first connection units (32,33,34,35) comprises an electrical contact pad (54,55,56,57) at the first end (36,37,38,39), which is arranged in electrical contact with the electrically conductive surface layer of the respective cutting insert (12,13,14,15).

6. System according to claims 4 and 5, wherein each of the electric contact pads (54,55,56,57) are arranged in one respective insert pocket (16,17,18,19) between the electrically insulating material layer and the cutting insert (12,13,14,15) mounted in the insert pocket (16,17,18,19).

7. System according to any of the preceding claims, wherein all the first connection units (32,33,34,35) have the same electrical resistance.

8. System according to any of the preceding claims, wherein the analysis unit (70) is configured to determine a contact between each of the n cutting inserts (12,13,14,15) and an electrically conductive workpiece (20) based on the measured electrical voltages (U_{R44},U_{R45},U_{R46},U_{R47}).

9. System according to any of the preceding claims, wherein the system further comprises a time measurement device, which is operatively connected to the analysis unit (70), and wherein the analysis unit (70) is adapted to determine the time of contact between any of the n cutting inserts (12,13,14,15) and an electrically conductive workpiece (20).

10. System according to claim 9, wherein the analysis unit (70) is configured to determine the time of contact between each of the n cutting inserts (12,13,14,15) and an electrically conductive workpiece (20).

11. System according to claim 9 or 10, wherein the analysis unit (70) is configured to compare the determined time of contact with a minimum threshold value and to discard the determined contact if the determined time of contact is shorter than the minimum threshold value.

12. System according to claim 10 or 11, wherein the analysis unit (70) is configured to determine a plurality of subsequent contacts between each of the n cutting inserts (12,13,14,15) and an electrically conductive workpiece (20), and to determine the accumulated time of contact between each of the n cutting inserts (12,13,14,15) and an electrically conductive workpiece (20).

13. System according to claim 12, wherein the system further comprises a user interface (71), wherein the user interface (71) is operatively connected to the analysis unit (70), wherein the analysis unit (70) is configured to compare the determined accumulated time of contact with a maximum threshold value, wherein the analysis unit (70) is configured to generate a warning signal if the determined accumulated time of contact is equal to or higher than the maximum threshold value, and wherein the system is configured to generate a warning based on the generated warning signal, wherein the warning is presented via the user interface (71).

14. System according to claim 12 or 13, wherein the analysis unit (70) is operatively connected to a database (90), and wherein the system is configured to store the determined accumulated time of contact between each of the n cutting inserts (12,13,14,15) and an electrically conductive workpiece (20) in the database (90).

15. Method for determining contact between a cutting tool and an electrically conductive workpiece, the method comprises the steps of:
S1: providing a system according to any of claims 1-14;
S2: providing an electrically conductive workpiece (20);
S3: operatively connecting the electrically conductive workpiece (20) to the second pole (50) of the electric power source (31) via the contact (52);
S4: electrically charging the electrically conductive surface layer of the n cutting inserts (12,13,14,15), by activating the electric power source (31);
S5: measuring an electrical voltage (U_{R44},U_{R45},U_{R46},U_{R47}) over each first connection unit (32,33,34,35);
S6: transmitting the measured electrical voltages (U_{R44},U_{R45},U_{R46},U_{R47}) to the analysis unit (70); and
S7: determining a contact between the cutting tool (10) and the electrically conductive workpiece (20) by analyzing the measured electrical voltages (U_{R44},U_{R45},U_{R46},U_{R47}), where a contact is determined to take place if a measured electrical voltage (U_{R44},U_{R45},U_{R46},U_{R47}) has a non-zero value.

16. Method according to claim 15, wherein the method further comprises the step of: S8: arranging the toolholder (11), the electrically conductive workpiece (20), and one of the first or second poles (48,50) of the electric power source (31) at the same electrical potential.

17. Method according to any of claims 15-16, wherein the method further comprises the step of:
S10: determining a contact between each of the n cutting inserts (12,13,14,15) and the electrically conductive workpiece (20) by analyzing the measured electrical voltages (U_{R44},U_{R45},U_{R46},U_{R47}), where a contact is determined to take place if the measured electrical voltage(U_{R44},U_{R45},U_{R46},U_{R47}) has a non-zero value.

18. Method according to any of claims 15-17, wherein the method further comprises the steps of:
S11: determining the measured electrical voltages (U_{R44},U_{R45},U_{R46},U_{R47}) as a function of time; and
S12: determining a time of contact between any of the n cutting inserts (12,13,14,15) and the electrically conductive workpiece (20).

19. Method according to claim 18, wherein the method further comprises the step of:
S13: determining a time of contact between each of the n cutting inserts (12,13,14,15) and the electrically conductive workpiece (20).

20. Method according to claim 18 or 19, wherein the method further comprises the steps of:
S14: comparing the determined time of contact with a minimum threshold value; and
S15: discarding the determined contact if the determined time of contact is shorter than the minimum threshold value.

21. Method according to claim 19 or 20, wherein the method further comprises the steps of:
S16: determining a plurality of subsequent contacts between each of the n cutting inserts (12,13,14,15) and the electrically conductive workpiece (20); and
S17: determining the accumulated time of contact between each of the n cutting inserts (12,13,14,15) and the electrically conductive workpiece (20).

22. Method according to claim 21, wherein the method further comprises the steps of:
S18: comparing the determined accumulated time of contact with a maximum threshold value;
S19: generating a warning signal if the determined accumulated time of contact is equal to or higher than the maximum threshold value;
S20: generating a warning based on the generated warning signal; and
S21: presenting the warning via a user interface (71).

23. Method according to claim 21 or 22, wherein the method further comprises the step of:
S22: storing the determined accumulated time of contact between each of the n cutting inserts (12,13,14,15) and the electrically conductive workpiece (20) in a database (90).

## Patentansprüche

1. System zur Ermittlung des Kontakts zwischen einem Schneidwerkzeug (10) und einem elektrisch leitfähigen Werkstück (20), wobei das System ein Schneidwerkzeug (10) aufweist, das einen Werkzeughalter (11) und n Schneideinsätze (12, 13, 14, 15) aufweist, die in dem Werkzeughalter (11) montiert sind, wobei n eine ganze Zahl ≥ 2 ist, wobei jeder der n Schneideinsätze (12, 13, 14, 15) eine elektrisch leitende Oberflächenschicht aufweist, wobei das Schneidwerkzeug (10) dafür eingerichtet ist, die n Schneideinsätze (12, 13, 14, 15) in und außer Kontakt mit einem elektrisch leitenden Werkstück (20) zu bringen, **dadurch gekennzeichnet, dass** jeder der n Schneideinsätze (12, 13, 14, 15) von dem Werkzeughalter (11) elektrisch isoliert ist und dass das System ferner einen elektrischen Schaltkreis (30) aufweist, wobei der elektrische Schaltkreis (30) Folgendes aufweist:
- eine elektrische Energiequelle (31), die so angeordnet ist, dass sie eine elektrische Spannung (UA) erzeugt, und
- n erste Verbindungseinheiten (32, 33, 34, 35), die jeweils ein erstes Ende (36, 37, 38, 39), ein zweites Ende (40, 41, 42, 43) und, zwischen dem ersten Ende (36, 37, 38, 39) und dem zweiten Ende (40, 41, 42, 43), ein Widerstandselement (44, 45, 46, 47) mit einem elektrischen Widerstand (R44, R45, R45, R47) aufweisen, wobei jede der n ersten Verbindungseinheiten (32, 33, 34, 35) elektrisch mit einem jeweiligen Schneideinsatz (12, 13, 14, 15) an dem ersten Ende (36, 37, 38, 39) und mit einem ersten Pol (48) der elektrischen Stromquelle (31) an dem zweiten Ende (40, 41, 42, 43) verbunden sind, wobei jede der n ersten Verbindungseinheiten (32, 33, 34, 35) elektrisch mit dem ersten Pol (48) parallel zu allen anderen n-1 ersten Verbindungseinheiten (32, 33, 34, 35) verbunden ist, und
- eine zweite Verbindungseinheit (49), die an einem ersten Ende (51) operativ mit einem zweiten Pol (50) der elektrischen Stromquelle (31) verbunden ist und einen Kontakt (52) aufweist, der dafür eingerichtet ist, an einem zweiten Ende (53) elektrisch mit einem elektrisch leitenden Werkstück (20) verbunden zu werden, wobei
das System ferner eine Messeinheit (60) und eine Analyseeinheit (70) aufweist, wobei die Messeinheit (60) dafür eingerichtet ist, eine elektrische Spannung (UR44, UR45, UR46, UR47) über jeder der ersten Verbindungseinheiten (32, 33, 34, 35) zu messen, wobei die Messeinheit (60) operativ mit der Analyseeinheit (70) verbunden ist, wobei die Analyseeinheit (70) dafür eingerichtet ist, auf der Grundlage der gemessenen elektrischen Spannungen (UR44, UR45, UR46, UR47) einen Kontakt zwischen dem Schneidwerkzeug (10) und einem elektrisch leitfähigen Werkstück (20) zu ermitteln.

2. System nach Anspruch 1, wobei das System ferner ein elektrisch leitfähiges Werkstück (20) aufweist, wobei das elektrisch leitfähige Werkstück (20) über den Kontakt (52) mit dem zweiten Pol (50) der elektrischen Stromquelle (31) elektrisch verbunden ist.

3. System nach Anspruch 2, wobei der Werkzeughalter (11), das elektrisch leitende Werkstück (20) und einer der ersten oder zweiten Pole (48, 50) der elektrischen Stromquelle (31) das gleiche elektrische Potential aufweisen.

4. System nach einem der vorhergehenden Ansprüche, wobei der Werkzeughalter (11) n Einsatztaschen (16, 17, 18, 19) aufweist, wobei jeder der n Schneideinsätze (12, 13, 14, 15) in einer jeweiligen Einsatztasche (16, 17, 18, 19) montiert ist, wobei jede der n Einsatztaschen (16, 17, 18, 19) eine elektrisch isolierende Materialschicht zwischen dem Werkzeughalter (11) und dem in der Einsatztasche (16, 17, 18, 19) montierten Schneideinsatz (12, 13, 14, 15) aufweist.

5. System nach einem der vorhergehenden Ansprüche, wobei jede der n ersten Verbindungseinheiten (32, 33, 34, 35) am ersten Ende (36, 37, 38, 39) eine elektrische Kontaktfläche (54, 55, 56, 57) aufweist, die in elektrischem Kontakt mit der elektrisch leitenden Oberflächenschicht des jeweiligen Schneideinsatzes (12, 13, 14, 15) angeordnet ist.

6. System nach den Ansprüchen 4 und 5, wobei die elektrischen Kontaktflächen (54, 55, 56, 57) jeweils in einer Einsatztasche (16, 17, 18, 19) zwischen der elektrisch isolierenden Materialschicht und dem Schneideinsatz (12, 13, 14, 15) angeordnet sind, der in der Einsatztasche (16, 17, 18, 19) montiert ist.

7. System nach einem der vorhergehenden Ansprüche, wobei alle ersten Verbindungseinheiten (32, 33, 34, 35) den gleichen elektrischen Widerstand aufweisen.

8. System nach einem der vorhergehenden Ansprüche, wobei die Analyseeinheit (70) dafür eingerichtet ist, einen Kontakt zwischen jedem der n Schneideinsätze (12, 13, 14, 15) und einem elektrisch leitenden Werkstück (20) auf der Grundlage der gemessenen elektrischen Spannungen (UR44, UR45, UR46, UR47) zu ermitteln.

9. System nach einem der vorhergehenden Ansprüche, wobei das System ferner eine Vorrichtung zur Zeitmessung aufweist, die mit der Analyseeinheit (70) operativ verbunden ist, und wobei die Analyseeinheit (70) geeignet ist, die Zeit des Kontakts zwischen einem der n Schneideinsätze (12, 13, 14, 15) und einem elektrisch leitfähigen Werkstück (20) zu ermitteln.

10. System nach Anspruch 9, wobei die Analyseeinheit (70) dafür eingerichtet ist, die Zeit des Kontakts zwischen jedem der n Schneideinsätze (12, 13, 14, 15) und einem elektrisch leitfähigen Werkstück (20) zu ermitteln.

11. System nach Anspruch 9 oder 10, wobei die Auswerteeinheit (70) dafür eingerichtet ist, die ermittelte Kontaktzeit mit einem minimalen Schwellenwert zu vergleichen und den ermittelten Kontakt zu verwerfen, wenn die ermittelte Kontaktzeit kürzer als der minimale Schwellenwert ist.

12. System nach Anspruch 10 oder 11, wobei die Analyseeinheit (70) dafür eingerichtet ist, eine Vielzahl von aufeinanderfolgenden Kontakten zwischen jedem der n Schneideinsätze (12, 13, 14, 15) und einem elektrisch leitfähigen Werkstück (20) zu ermitteln und die kumulierte Kontaktzeit zwischen jedem der n Schneideinsätze (12, 13, 14, 15) und einem elektrisch leitfähigen Werkstück (20) zu ermitteln.

13. System nach Anspruch 12, wobei das System ferner eine Benutzerschnittstelle (71) aufweist, wobei die Benutzerschnittstelle (71) mit der Analyseeinheit (70) operativ verbunden ist, wobei die Analyseeinheit (70) dafür eingerichtet ist, die ermittelte akkumulierte Kontaktzeit mit einem maximalen Schwellenwert zu vergleichen, wobei die Analyseeinheit (70) dafür eingerichtet ist, ein Warnsignal zu erzeugen, wenn die ermittelte akkumulierte Kontaktzeit gleich oder größer als der maximale Schwellenwert ist, und wobei das System dafür eingerichtet ist, eine Warnung auf der Grundlage des erzeugten Warnsignals zu erzeugen, wobei die Warnung über die Benutzerschnittstelle (71) angezeigt wird.

14. System nach Anspruch 12 oder 13, wobei die Analyseeinheit (70) operativ mit einer Datenbank (90) verbunden ist, und wobei das System dafür eingerichtet ist, die ermittelte akkumulierte Kontaktzeit zwischen jedem der n Schneideinsätze (12, 13, 14, 15) und einem elektrisch leitenden Werkstück (20) in der Datenbank (90) zu speichern.

15. Verfahren zum Ermitteln des Kontakts zwischen einem Schneidwerkzeug und einem elektrisch leitenden Werkstück, wobei das Verfahren die folgenden Schritte aufweist:
S1: Bereitstellen eines Systems nach einem der Ansprüche 1-14,
S2: Bereitstellen eines elektrisch leitfähigen Werkstücks (20),
S3: operatives Verbinden des elektrisch leitfähigen Werkstücks (20) mit dem zweiten Pol (50) der elektrischen Stromquelle (31) über den Kontakt (52),
S4: elektrisches Unterspannungsetzen der elektrisch leitenden Oberflächenschicht der n Schneideinsätze (12, 13, 14, 15) durch Aktivieren der elektrischen Stromquelle (31),
S5: Messen einer elektrischen Spannung (UR44, UR45, UR46, UR47) über jeder ersten Verbindungseinheit (32, 33, 34, 35),
S6: Übertragen der gemessenen elektrischen Spannungen (UR44, UR45, UR46, UR47) an die Analyseeinheit (70) und
S7: Ermitteln eines Kontakts zwischen dem Schneidwerkzeug (10) und dem elektrisch leitenden Werkstück (20) durch Analysieren der gemessenen elektrischen Spannungen (UR44, UR45, UR46, UR47), wobei ein Kontakt festgestellt wird, wenn eine gemessene elektrische Spannung (UR44, UR45, UR45, UR47) einen Wert ungleich Null aufweist.

16. Verfahren nach Anspruch 15, wobei das Verfahren ferner den folgenden Schritt aufweist:
S8: Anordnen des Werkzeughalters (11), des elektrisch leitenden Werkstücks (20) und eines der ersten oder zweiten Pole (48, 50) der elektrischen Stromquelle (31) auf demselben elektrischen Potential.

17. Verfahren nach einem der Ansprüche 15-16, wobei das Verfahren ferner den folgenden Schritt aufweist:
S10: Ermitteln eines Kontakts zwischen jedem der n Schneideinsätze (12, 13, 14, 15) und dem elektrisch leitenden Werkstück (20) durch Analysieren der gemessenen elektrischen Spannungen (UR44, UR45, UR46, UR47), wobei ein Kontakt ermittelt wird, wenn die gemessene elektrische Spannung (UR44, UR45, UR46, UR47) einen Wert ungleich Null aufweist.

18. Verfahren nach einem der Ansprüche 15-17, wobei das Verfahren ferner die folgenden Schritte aufweist:
S11: Ermitteln der gemessenen elektrischen Spannungen (UR44, UR45, UR46, UR47) als Funktion der Zeit und
S12: Ermitteln einer Kontaktzeit zwischen irgendeinem der n Schneideinsätze (12, 13, 14, 15) und dem elektrisch leitenden Werkstück (20).

19. Verfahren nach Anspruch 18, wobei das Verfahren ferner den folgenden Schritt aufweist:
S13: Ermitteln einer Kontaktzeit zwischen jedem der n Schneideinsätze (12, 13, 14, 15) und dem elektrisch leitfähigen Werkstück (20).

20. Verfahren nach Anspruch 18 oder 19, wobei das Verfahren ferner die folgenden Schritte aufweist:
S14: Vergleichen der ermittelten Kontaktzeit mit einem minimalen Schwellenwert und
S15: Verwerfen des ermittelten Kontakts, wenn die ermittelte Kontaktzeit kürzer als der minimale Schwellenwert ist.

21. Verfahren nach Anspruch 19 oder 20, wobei das Verfahren ferner die folgenden Schritte aufweist:
S16: Ermitteln einer Vielzahl von aufeinanderfolgenden Kontakten zwischen jedem der n Schneideinsätze (12, 13, 14, 15) und dem elektrisch leitenden Werkstück (20) und
S17: Ermitteln der kumulierten Kontaktzeit zwischen jedem der n Schneideinsätze (12, 13, 14, 15) und dem elektrisch leitfähigen Werkstück (20).

22. Verfahren nach Anspruch 21, wobei das Verfahren ferner die folgenden Schritte aufweist:
S18: Vergleichen der ermittelten kumulierten Kontaktzeit mit einem maximalen Schwellenwert,
S19: Erzeugen eines Warnsignals, wenn die ermittelte akkumulierte Kontaktzeit gleich oder größer als der maximale Schwellenwert ist,
S20: Erzeugen einer Warnung auf der Grundlage des erzeugten Warnsignals und
S21: Anzeigen der Warnung über eine Benutzerschnittstelle (71).

23. Verfahren nach Anspruch 21 oder 22, wobei das Verfahren ferner den folgenden Schritt aufweist:
S22: Speichern der ermittelten kumulierten Kontaktzeit zwischen jedem der n Schneideinsätze (12, 13, 14, 15) und dem elektrisch leitenden Werkstück (20) in einer Datenbank (90).

## Revendications

1. Système de détermination de contact entre un outil de coupe (10) et une pièce d'ouvrage électriquement conductrice (20), le système comprenant un outil de coupe (10) comprenant un porte-outil (11) et n plaquettes de coupe (12, 13, 14, 15) montées sur le porte-outil (11), où n est un entier ≥ 2, où chacune des n plaquettes de coupe (12, 13, 14, 15) comprend une couche de surface électriquement conductrice, où l'outil de coupe (10) est configuré pour amener les n plaquettes de coupe (12, 13, 14, 15) en contact et hors de contact avec une pièce d'ouvrage électriquement conductrice (20), **caractérisé en ce que** chacune des n plaquettes de coupe (12, 13, 14, 15) est électriquement isolée vis-à-vis du porte-outil (11) ; et **en ce que** le système comprend en outre un circuit électrique (30), où le circuit électrique (30) comprend :
- une source d'alimentation électrique (31) agencée pour générer une tension électrique (U_{A}), et
- n premières unités de connexion (32, 33, 34, 35), lesquelles comprennent chacune une première extrémité (36, 37, 38, 39), une seconde extrémité (40, 41, 42, 43), et, entre la première extrémité (36, 37, 38, 39) et la seconde extrémité (40, 41, 42, 43), une résistance (44, 45, 46, 47) présentant une valeur ohmique (R₄₄, R₄₅, R₄₆, R₄₇), où chacune des n premières unités de connexion (32, 33, 34, 35) est électriquement reliée à une plaquette de coupe respective (12, 13, 14, 15) au niveau de la première extrémité (36, 37, 38, 39) et à un premier pôle (48) de la source d'alimentation électrique (31) au niveau de la seconde extrémité (40, 41, 42, 43), où chacune des n premières unités de connexion (32, 33, 34, 35) est électriquement reliée au premier pôle (48) en parallèle de toutes les autres n-1 premières unités de connexion (32, 33, 34, 35), et
- une seconde unité de connexion (49) reliée de manière fonctionnelle à un second pôle (50) de la source d'alimentation électrique (31) au niveau d'une première extrémité (51) et comprenant un contact (52) configuré pour être électriquement relié à une pièce d'ouvrage électriquement conductrice (20) au niveau d'une seconde extrémité (53) ; où
le système comprend en outre une unité de mesure (60) et une unité d'analyse (70), où l'unité de mesure (60) est configurée pour mesurer une tension électrique (U_{R44}, U_{R45}, U_{R46}, U_{R47}) sur chacune des premières unités de connexion (32, 33, 34, 35), où l'unité de mesure (60) est reliée de manière fonctionnelle à l'unité d'analyse (70), où l'unité d'analyse (70) est configurée pour déterminer un contact entre l'outil de coupe (10) et une pièce d'ouvrage électriquement conductrice (20) sur la base des tensions électriques mesurées (U_{R44}, U_{R45}, U_{R46}, U_{R47}).

2. Système selon la revendication 1, où le système comprend en outre une pièce d'ouvrage électriquement conductrice (20), où la pièce d'ouvrage électriquement conductrice (20) est électriquement reliée au second pôle (50) de la source d'alimentation électrique (31) via la contact (52).

3. Système selon la revendication 2, dans lequel le porte-outil (11), la pièce d'ouvrage électriquement conductrice (20), et l'un des premier et second pôles (48, 50) de la source d'alimentation électrique (31) ont le même potentiel électrique.

4. Système selon l'une quelconque des revendications précédentes, dans lequel le porte-outil (11) comprend n cavités à plaquette (16, 17, 18, 19), où chacune des n plaquettes de coupe (12, 13, 14, 15) est montée dans une cavité à plaquette respective (16, 17, 18, 19), où chacune des n cavités à plaquette (16, 17, 18, 19) comprend une couche de matériau électriquement isolant entre le porte-outil (11) et la plaquette de coupe (12, 13, 14, 15) montée dans la cavité à plaquette (16, 17, 18, 19).

5. Système selon l'une quelconque des revendications précédentes, dans lequel chacune des n premières unités de connexion (32, 33, 34, 35) comprend une plage de contact électrique (54, 55, 56, 57) au niveau de la première extrémité (36, 37, 38, 39), laquelle est agencée en contact électrique avec la couche de surface électriquement conductrice de la plaquette de coupe respective (12, 13, 14, 15).

6. Système selon les revendications 4 et 5, dans lequel chacune des plages de contact électrique (54, 55, 56, 57) est agencée dans une cavité à plaquette respective (16, 17, 18, 19) entre la couche de matériau électriquement isolant et la plaquette de coupe (12, 13, 14, 15) montée dans la cavité à plaquette (16, 17, 18, 19).

7. Système selon l'une quelconque des revendications précédentes, dans lequel toutes les premières unités de connexion (32, 33, 34, 35) ont la même valeur ohmique.

8. Système selon l'une quelconque des revendications précédentes, dans lequel l'unité d'analyse (70) est configurée pour déterminer un contact entre chacune des n plaquettes de coupe (12, 13, 14, 15) et une pièce d'ouvrage électriquement conductrice (20) sur la base des tensions électriques mesurées (U_{R44}, U_{R45}, U_{R46}, U_{R47}).

9. Système selon l'une quelconque des revendications précédentes, où le système comprend en outre un dispositif de mesure de temps, lequel est relié de manière fonctionnelle à l'unité d'analyse (70), et où l'unité d'analyse (70) est conçue pour déterminer le temps de contact entre l'une quelconque des n plaquettes de coupe (12, 13, 14, 15) et une pièce d'ouvrage électriquement conductrice (20).

10. Système selon la revendication 9, dans lequel l'unité d'analyse (70) est conçue pour déterminer le temps de contact entre chacune des n plaquettes de coupe (12, 13, 14, 15) et une pièce d'ouvrage électriquement conductrice (20).

11. Système selon la revendication 9 ou 10, dans lequel l'unité d'analyse (70) est conçue pour comparer le temps de contact déterminé à une valeur de seuil minimal et écarter le contact déterminé si le temps de contact déterminé est plus court que la valeur de seuil minimal.

12. Système selon la revendication 10 ou 11, dans lequel l'unité d'analyse (70) est conçue pour déterminer une pluralité de contacts successifs entre chacune des n plaquettes de coupe (12, 13, 14, 15) et une pièce d'ouvrage électriquement conductrice (20), et pour déterminer le temps de contact cumulé entre chacune des n plaquettes de coupe (12, 13, 14, 15) et une pièce d'ouvrage électriquement conductrice (20).

13. Système selon la revendication 12, où le système comprend en outre une interface utilisateur (71), où l'interface utilisateur (71) est reliée de manière fonctionnelle à l'unité d'analyse (70), où l'unité d'analyse (70) est configurée pour comparer le temps de contact cumulé déterminé à une valeur de seuil maximal, où l'unité d'analyse (70) est configurée pour générer un signal d'avertissement si le temps de contact cumulé déterminé est supérieur ou égal à la valeur de seuil maximal, et où le système est configuré pour générer un avertissement sur la base du signal d'avertissement généré, où l'avertissement est présenté via l'interface utilisateur (71).

14. Système selon la revendication 12 ou 13, dans lequel l'unité d'analyse (70) est reliée de manière fonctionnelle à une base de données (90), et où le système est configuré pour mémoriser le temps de contact cumulé déterminé entre chacune des n plaquettes de coupe (12, 13, 14, 15) et une pièce d'ouvrage électriquement conductrice (20) dans la base de données (90).

15. Procédé de détermination de contact entre un outil de coupe et une pièce d'ouvrage électriquement conductrice, le procédé comprenant les étapes consistant à :
S1 : fournir un système selon l'une quelconque des revendications 1 à 14 ;
S2 : fournir une pièce d'ouvrage électriquement conductrice (20) ;
53 : relier de manière fonctionnelle la pièce d'ouvrage électriquement conductrice (20) au second pôle (50) de la source d'alimentation électrique (31) via le contact (52) ;
S4 : charger électriquement la couche de surface électriquement conductrice des n plaquettes de coupe (12, 13, 14, 15), en activant la source d'alimentation électrique (31) ;
S5 : mesurer une tension électrique (U_{R44}, U_{R45}, U_{R46}, U_{R47}) sur chaque première unité de connexion (32, 33, 34, 35) ;
S6 : transmettre les tensions électriques mesurées (U_{R44}, U_{R45}, U_{R46}, U_{R47}) à l'unité d'analyse (70) ; et
S7 : déterminer un contact entre l'outil de coupe (10) et la pièce d'ouvrage électriquement conductrice (20) en analysant les tensions électriques mesurées (U_{R44}, U_{R45}, U_{R46}, U_{R47}), où un contact est déterminé comme effectif si une tension électrique mesurée (U_{R44}, U_{R45}, U_{R46}, U_{R47}) a une valeur non nulle.

16. Procédé selon la revendication 15, où le procédé comprend en outre l'étape consistant à :
S8 : mettre le porte-outil (11), la pièce d'ouvrage électriquement conductrice (20), et l'un des premier et second pôles (48, 50) de la source d'alimentation électrique (31) au même potentiel électrique.

17. Procédé selon l'une quelconque des revendications 15 et 16, où le procédé comprend en outre l'étape consistant à :
S10 : déterminer un contact entre chacune des n plaquettes de coupe (12, 13, 14, 15) et la pièce d'ouvrage électriquement conductrice (20) en analysant les tensions électriques mesurées (U_{R44}, U_{R45}, U_{R46}, U_{R47}), où un contact est déterminé comme effectif si la tension électrique mesurée (U_{R44}, U_{R45}, U_{R46}, U_{R47}) a une valeur non nulle.

18. Procédé selon l'une quelconque des revendications 15 à 17, où le procédé comprend en outre les étapes consistant à :
S 11 : déterminer les tensions électriques mesurées (U_{R44}, U_{R45}, U_{R46}, U_{R47}) en fonction du temps ; et
S12 : déterminer un temps de contact entre l'une quelconque des n plaquettes de coupe (12, 13, 14, 15) et la pièce d'ouvrage électriquement conductrice (20).

19. Procédé selon la revendication 18, où le procédé comprend en outre l'étape consistant à :
513 : déterminer un temps de contact entre chacune des n plaquettes de coupe (12, 13, 14, 15) et la pièce d'ouvrage électriquement conductrice (20).

20. Procédé selon la revendication 18 ou 19, où le procédé comprend en outre les étapes consistant à :
514 : comparer le temps de contact déterminé à une valeur de seuil minimal ; et
S15 : écarter le contact déterminé si le temps de contact déterminé est plus court que la valeur de seuil minimal.

21. Procédé selon la revendication 19 ou 20, où le procédé comprend en outre les étapes consistant à :
516 : déterminer une pluralité de contacts successifs entre chacune des n plaquettes de coupe (12, 13, 14 ,15) et la pièce d'ouvrage électriquement conductrice (20) ; et
517 : déterminer le temps de contact cumulé entre chacune des n plaquettes de coupe (12, 13, 14 ,15) et la pièce d'ouvrage électriquement conductrice (20).

22. Procédé selon la revendication 21, où le procédé comprend en outre les étapes consistant à :
S18 : comparer le temps de contact cumulé déterminé à une valeur de seuil maximal ;
519 : générer un signal d'avertissement si le temps de contact cumulé déterminé est supérieur ou égal à la valeur de seuil maximal ;
S20 : générer un avertissement sur la base du signal d'avertissement généré ; et
S21 : présenter l'avertissement via une interface utilisateur (71).

23. Procédé selon la revendication 21 ou 22, où le procédé comprend en outre l'étape consistant à :
S22 : mémoriser le temps de contact cumulé déterminé entre chacune des n plaquettes de coupe (12, 13, 14, 15) et la pièce d'ouvrage électriquement conductrice (20) dans une base de données (90).
